# EUROPEAN PATENT APPLICATION

(11) **EP 0 945 077 A1**
(43) Date of publication of application: **29.09.1999**
(21) Application number: 99200937.3
(22) Date of filing: 25.03.1999
(51) Int. Cl.: A23L 3/36

(54) **Apparatus and method for freezing food products**

(30) Priority: 26.03.1998 NL 1008720
(71) Applicant: GTI Koudetechniek B.V., 2712 LA Zoetermeer (NL)
(72) Inventor: Kortenbach, Johannes Martinus Hubertus, 7391 JP Twello (NL); Viswat, Eppo, 9761 AE Eelde (NL)
(74) Representative: Ottevangers, Sietse Ulbe

(57) **Abstract**

An apparatus for freezing food products, comprising at least one freezing space and one conveying track for moving the food products through the freezing space, wherein blowing means are provided for blowing a cooled medium over the products present on the conveying track, wherein the blowing means comprise blowing openings, at least above at least a portion of the at least one conveying track, said blowing openings being arranged for blowing out the cooled medium at least substantially at right angles to the conveying direction of the at least one conveying track.

## Description

The invention relates to an apparatus for freezing food products. Such an apparatus is known from practice.

The known apparatus comprises a conveyor belt extending through a freezing space. Arranged on one side of the conveyor belt are blowing means, provided with a blow-out opening extending along the longitudinal direction of the belt, through which blow-out opening a highly cooled medium can be blown during use, approximately parallel to the surface of the conveyor belt and the products located thereon. During movement through the freezing space, the products are cooled in such a manner that they freeze.

Research has shown that the freezing rate for the products should be as high as possible, in order to prevent or at least minimize the abstraction of moisture from the products during freezing and quality losses during thawing. Without wishing to be bound to any theory, it is moreover assumed that the freezing rate should be as high as possible to prevent or at least minimize the formation of large crystals. Large crystals in the products will cause damages to the cell membranes and drip losses and will consequently adversely affect the storage lives of the products.

In the known apparatus, the cooled medium is blown over the products approximately horizontally. This allows the flow velocity of the cooled medium to be chosen only relatively low, in particular when this is measured on the surface of the products to be cooled. Unduly high medium velocities effect movements of the products relative to the conveying track, in undesired directions. This involves the risk of the products being blown from the conveying track. Further, in this known apparatus, unduly great turbulences are created adjacent the blowing opening, so that the cooling action of the cooled medium is reduced still further.

The object of the invention is to provide an apparatus of the type described in the preamble, in which the drawbacks mentioned are avoided, while the advantages thereof are retrained. To that end, an apparatus according to the invention is characterized by the features of claim 1.

Because in an apparatus according to the invention, the blowing means are arranged for blowing out the cooled medium against the products in vertical direction, at least substantially approximately at right angles to the products and the conveying direction, the products are prevented from being blown from the conveying track by the flow of medium. This offers the advantage that the air velocity can be increased considerably without involving product loss. Moreover, this considerably limits fouling of the environment of the conveyor belt.

As the flow of medium is blown on the products at relatively high-velocity, a favorable angle of incidence is obtained and, moreover, the stagnant layer around the products is broken, to obtain a relatively good heat transfer between the flow of medium and the products. This is important in particular with fresh, not yet highly cooled products, since the heat conductivity thereof is considerably less than that of frozen products. Thus, even when a medium of a not particularly low temperature is used for cooling, a very good and fast cooling can be realized. This is advantageous in terms of energy and product technology.

In an advantageous embodiment, an apparatus according to the invention is characterized by the features of claim 2.

When the blowing openings are formed by jet nozzles or the like, the advantage achieved is that the medium can be blown out relatively easily at a relatively high velocity, directed to the product. Moreover, in this manner, a concentration of the cooled medium is obtained which enables an ever better cooling.

In further elaboration, an apparatus according to the invention is characterized by the features of claim 3.

Positioning the blowing openings in rows and/or columns leads to a system that has the advantage of providing a regular distribution of the medium over the products, while, moreover, between the separate rows of blowing openings there are obtained zones in which no or at least considerably less cooled medium is blown on the products. By alternately traveling through a range in which cooled medium is blown over the products and a range in which no, or at least little cooled medium is blown over the products, an energetic manner of cooling is obtained. Indeed, is has surprisingly been found that the continuous blowing of relatively fresh, warm products with a flow of cold medium hardly leads to faster cooling than the intermittent blowing of such products with medium of the same temperature. For this reason alone, an apparatus according to the invention requires less cold medium than the known apparatus for freezing an equal amount of food products.

In a first particularly advantageous embodiment, an apparatus according to the invention is further characterized by the features of claim 4.

Positioning a series of blowing openings of at least one row in the bottom of a box-like part offers the advantage that such an apparatus is relatively simple to manufacture and to maintain. The or each box-like part readily enables access to the blowing openings, also in the case of relatively small blowing openings.

In contrast with the known apparatus, this moreover achieves the advantage that fouling of the apparatus, in particular of the blowing openings, can be avoided, or at least remedied, in a simpler manner. A further advantage of such an embodiment is that medium flowed from the blowing openings cannot flow through two blowing openings located next to each other in the same row of blowing openings, whereby undesired turbulence of the medium can be prevented at least largely. This, too, increases the cooling action of an apparatus according to the invention even further.

In further elaboration, and apparatus according to the invention is further characterized by the features of claim 5.

Positioning a series of box-like parts one behind the other, with a duct-shaped recess provided between every two box-like parts lying behind each other, offers the advantage that undesired turbulence of the cooled medium within the apparatus is further limited. Indeed, at least a large part of the cooled medium that is fed from the blowing openings during use, can be discharged through said duct-shaped recesses sideways, for instance for reuse, without obstructing the outflowing medium and without the products, in particular the position thereof on the conveying track, being adversely affected.

In an alternative embodiment, an apparatus according to the invention is characterized by the features of claim 8.

Positioning at least a portion of a row of blowing openings in the wall of a tubular part offers a solution for providing said blowing openings that is advantageous in terms of construction, maintenance and economy. Moreover, the advantage thus achieved is that in a particularly directed manner, cooled medium can be fed to the blowing openings, for each tubular part separately. In this manner, for different rows, for instance a different flow velocity of the cooled medium can be obtained, while other magnitudes of the feed of the cooled medium can be influenced as well, for instance the optional individual feed of cooled medium to the different tubular parts, different interval times, different temperatures and the like.

As a matter of fact, it is observed that at least a number of the blowing openings in, for instance, the earlier described box-like parts or tubular parts may have a flow-out direction which has a preferably relatively small component in or against the conveying direction of the conveying track. An advantage hereof may be that the movements of the products on the conveying track in the conveying direction can thus be positively influenced, for instance through acceleration or deceleration by means of the outflowing, cooled medium.

In a particularly advantageous embodiment, an apparatus according to the invention is further characterized by the features of claim 12.

The advantage achieved by designing the apparatus in such a manner that the cooled medium from at least a number of the blowing openings is blown at a velocity such that the velocity of the medium whereby the products are impinged is higher than 4 m/s, preferably more than 5 m/s and in particular between 12 and 25 m/s, is that a stagnant layer around the product can readily be broken by the flow of medium and a better heat transfer can be obtained, and hence a faster cooling. Such relatively high velocities are in particular possible due to the selected flow-out direction of the cooled medium. Moreover, the blowing openings contribute to directed flows of cooled medium which may have a relatively high velocity. The flow-out pattern (direction, velocity and the like) will be selected so that damage to the products is prevented, which may in particular result in a maximum flow-out velocity.

The invention further relates to an apparatus according to claim 13.

Positioning blowing openings on opposite sides of the conveying track offers the advantage that the products are cooled from two sides, while, moreover, the products can at least partly be carried and, possibly, propelled by the outflowing cooled medium. This is possible in particular because the streams of cooled medium at least practically do not generate a force component on the products in a direction transverse to the conveying direction, so that the products are prevented from being pushed from the conveying track by the streams of cooled medium. Thus, a slightly floating product flow may be obtained, which prevents damages and simplifies conveyance.

The invention further relates to a method for freezing, at least supercooling food products, characterized by the features of claim 14.

The invention moreover relates to blowing means for use in an apparatus or method according to the present invention.

Furthermore, the invention relates to a box-like part or tubular part for use in an apparatus or method according to the present invention.

Further advantageous embodiments of an apparatus or method according to the present invention are given in the subclaims.

To clarify the invention, exemplary embodiments of an apparatus and method, and of blowing means, a box-like part and a tubular part therefor will hereinafter be described with reference to the accompanying drawings. In these drawings:
Fig. 1 is a schematic top plan view of an apparatus according to the invention, in partial section, taken on the line I-I in Fig. 2;
Fig. 2 is a schematic sectional side elevation of an apparatus taken on the line II-II in Fig. 1;
Fig. 3 is a schematic sectional front view of an apparatus according to Figs. 1 and 2;
Fig. 4 is a sectional side elevation of a box-like part for use in an apparatus according to the invention;
Fig. 5 is a schematic sectional top plan view of a portion of an apparatus according to the invention, in an alternative embodiment;
Fig. 6 is a sectional side elevation of an apparatus taken on the line VI-VI in Fig. 5;
Fig. 7 is a sectional front view of an apparatus taken on the line VII-VII in Fig. 5; and
Fig. 8 is a sectional side elevation of two tubular parts for use in an apparatus according to the invention.

In this description of the drawings, comparable parts have corresponding reference numerals. Whenever in this description products to be cooled or frozen are mentioned, these should at least be understood to include different types of food products that are cooled in such a manner that, accordingly, the lifetime, in particular the storage life, is prolonged without involving any notable loss of quality.

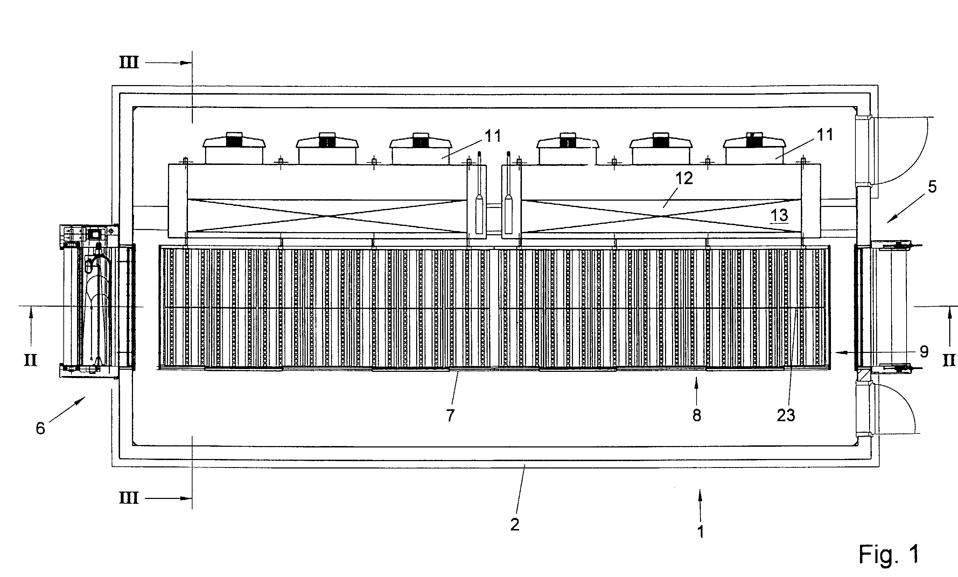

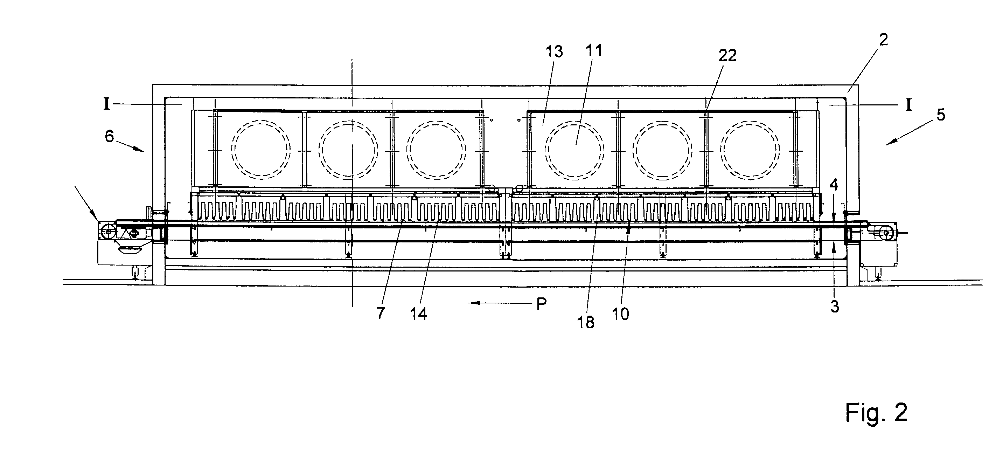

Fig. 1 is a sectional top plan view of an apparatus 1 for freezing products, which apparatus 1 comprises a housing 2 through which a conveyor belt 3 extends in horizontal direction, as shown in particular in Fig. 2. The top side 4 of the conveyor belt 3 constitutes a conveying surface, enabling products to be moved in a relatively warm condition adjacent a first end 5 within the housing 2 and to leave the housing in frozen condition at the opposite, second end 6.

Provided at some distance above the top side 4 of the conveyor belt 3 is a matrix of blowing openings 7 having rows 8 extending at right angles to the conveying direction P and columns 9 extending parallel to the conveying direction P. These blowing openings 7 are provided in box-like parts 10, which will be discussed in more detail hereinbelow.

Arranged next to the conveyor belt 3, within the housing 2, are a series of fans 11 and cooling means 12, known per se, for displacing relatively substantial streams of cooled medium. Provided between the blowing side of the fans 11 and the open top side of the box-like parts 10 are diversion means 13 for the cooled medium, in the form of an inner housing, through which the medium, cooled by the cooling means 12, can be passed to the blowing openings 7 by the fans 11 and blown with force from the blowing openings 7 against products (not shown) located on the conveyor belt 3. In the exemplary embodiment shown, the inner housing 13 is constructed as a casing built up from plate.

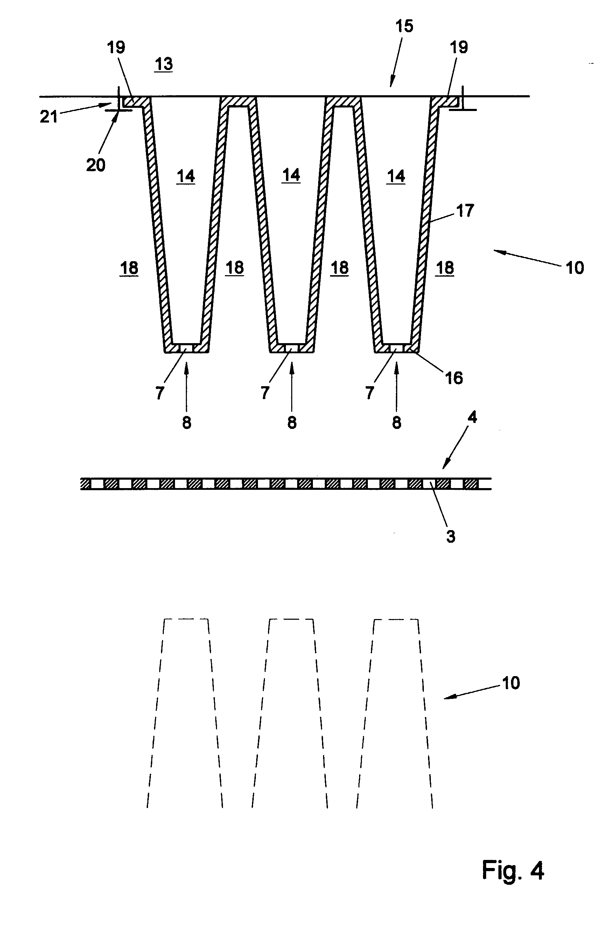

As shown in more detail in Fig. 4, a box-like part 10 comprises a number of rows 8 of blowing openings 7, three rows in the embodiment shown. Each box-like part 10 is preferably manufactured from sheet material, for instance through deep-drawing or thin-drawing from metal or, in an advantageous embodiment, manufactured from plastic through, for instance, vacuum-forming, molding or injection molding. Suitable manufacturing manners will readily occur to a skilled person. In the exemplary embodiment shown, each box-like part 10 comprises three chambers 14 extending parallel to each other and tapering slightly in the direction of the blowing openings 7, which chambers 14 are open at the top side 15 and, during use, communicate with the inner housing 13. Hence, cooled medium blown into the chambers 14 via the top side 15 will be accelerated in the chambers 14 and blown with force from the blowing openings 7, with the chambers 14 acting as jet nozzles or like medium-accelerating devices. The inner walls of the chambers 14 are of smooth design, so that cleaning thereof is readily possible. Each row 8 of blowing openings 7 is provided in the bottom 16 of a chamber 14, to obtain a blowing direction at right angles to the conveying direction. If necessary, partition walls 23 may be provided in each chamber 14, to obtain subchambers within each chamber 14 for separating streams of medium. Moreover, this increases the rigidity of the box-like parts.

As appears from the top plan view of Fig. 1, two inner housings 13 have been provided, each fitted with, for instance, three fans 11 and associated cooling means 12. Of course, other numbers of inner housings and/or fans may be used. Preferably, between two adjacent fans 11, a partition wall 22 is each time incorporated, such that with each fan 11, always a limited number of blowing openings 7 are blown. The advantage thus achieved is that, for instance, the blowing velocity of the medium and/or the temperature thereof and/or any intermittent pattern thereof over the conveyor belt 3, viewed in conveying direction P, can be controlled, to obtain an optimal cooling profile. As a matter of fact, in an advantageous embodiment, two relatively narrow box-like parts 10, possibly of different design, may be arranged side by side. Such relatively small box-like parts 10 can be manufactured and treated, for instance cleaned, removed and installed, in a relatively simple manner.

Provided between the sidewalls 17 of every two juxtaposed chambers 14 is a duct-shaped recess, to be referred to as duct 18, which is open towards at least one side and preferably either side of the box-like part 10. Conversely, the chambers 14 are closed towards the sides. During use, cooled medium blown from the blowing openings 7 can flow into the ducts 18 and be discharged via these ducts, without the streams of medium blown from the blowing openings 7 thereby undergoing any undesired turbulences and other influences. On the outer side facing the ducts 18, the walls 17 are preferably smooth or provided with structure that has a positive effect on the flow.

Provided adjacent the top side 15, on either side of the box-like part 10, is a flange 19 whereby the box-like part can be connected to the bottom side of the inner housing 13, to obtain a preferably air-tight and moisture-proof sealing between the relevant box-like part 10 and the inner housing 13. This prevents leakage of cooled medium. To that end, in the embodiment shown, a series of T-shaped sections 20 are provided on the bottom side of the inner housing 13, which T-shaped sections extend parallel to each other and at right angles to the feed-through direction P, to form two horizontally extending ducts 21, open towards the sides, into which a flange 19 of the box-like part 10 can be slid, preferably with some clamping action. This means that each box-like part 10 can readily be removed and installed, so that the box-like parts and the further apparatus can be cleaned in a particularly simple manner.

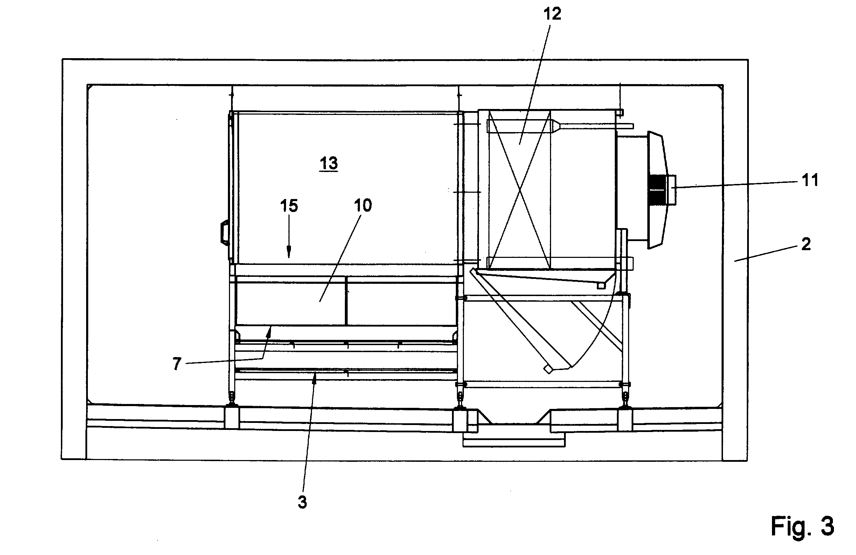

An apparatus 1 according to Figs. 1-4 can be employed as follows.

Adjacent the first end 5, products are placed on the top side 4 of the conveyor belt 3 and moved inside the housing 2 under the blowing openings 7. Simultaneously, cooled medium, for instance air or another suitable gas or gas/air mixture, optionally provided with, for instance, fungicidal and/or bactericidal additives, is drawn in by the fans 11 from the housing 2 and/or the ducts 18 and blown along the cooling means 12, to obtain a desired, relatively low temperature. The cooled medium preferably has a temperature of between -50 and +20°C, whereby cooling and/or freezing of products can be effected, which products may or may not be prefrozen or precooled. Also, glazing may take place. Via the inner housing 13, the cooled medium is forced into the chambers 14 and, from there, blown in vertical direction out of the blowing openings 7, substantially at right angles to the feed-through direction P of the products on the conveyor belt 3. Next, the cooled medium is drawn off via the ducts 18 and, via further diversion means, returned to preferably the suction side of the fans 11 for a next cooling cycle. Since the cooled medium is blown out substantially vertically, i.e. at right angles to the feed-through direction P, the flow velocity thereof can be increased relatively considerably, which is particularly favorable for effecting a proper cooling. Preferably, the flow velocity of the cooled medium is selected so that, measured on or at least adjacent the surface of the products, the flow velocity is higher than 4 m/s, more in particular more than 5 m/s and preferably between 12 and 25 m/s. It applies that a higher flow velocity will generally result in a better cooling, because a better heat transfer will take place, in particular because a stagnant air layer, if any, around the product can then readily be broken, although it will be possible to reach an optimum velocity.

Since the blowing openings 7 are arranged in rows 8, which may be spaced apart a distance which, compared with the dimensions of the blowing openings 7, is relatively large, the advantage achieved is that during feed-through of products, these openings are alternately blown and not blown by streams of medium. Accordingly, a particularly satisfactory cooling result is obtained with relatively little cooled medium, in that in a particularly favorable manner, heat exchange between the products and the surroundings, in particular the cooled medium, can be obtained. Without wishing to be bound to any theory, it is assumed that this surprising effect occurs due to the fact that heat transfer from the core of the products to the cooled surface thereof does not increase significantly upon further cooling of the surface in the period between the passing of two rows of blowing openings 7. Hence, with an apparatus or method according to the present invention, an intermittent cooling pattern is obtained, which may also be achieved or enhanced by blowing cooled medium intermittently. Thus, energy is saved.

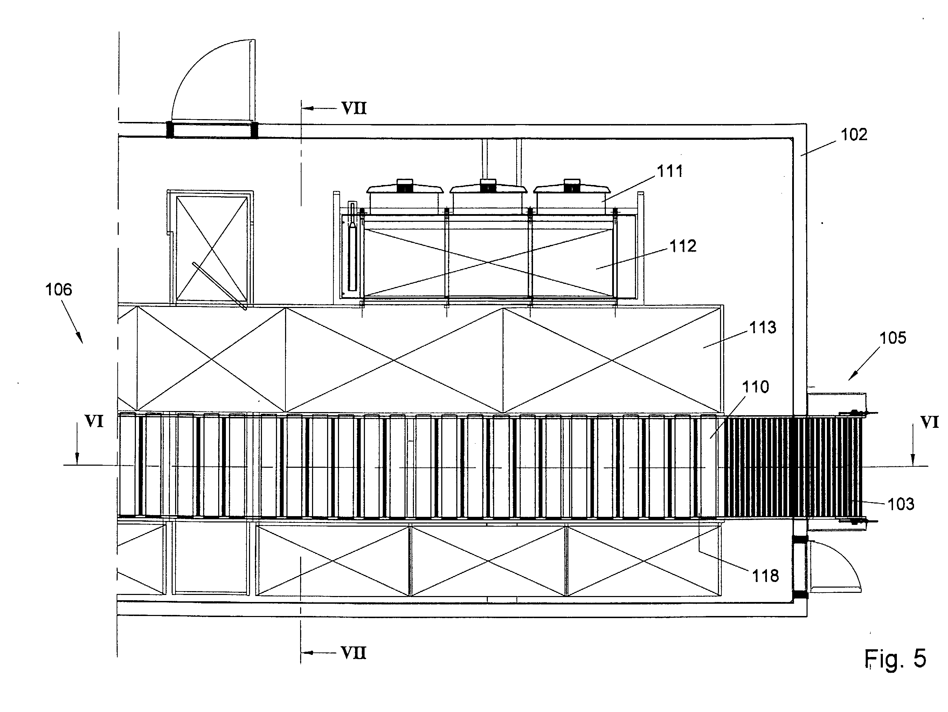

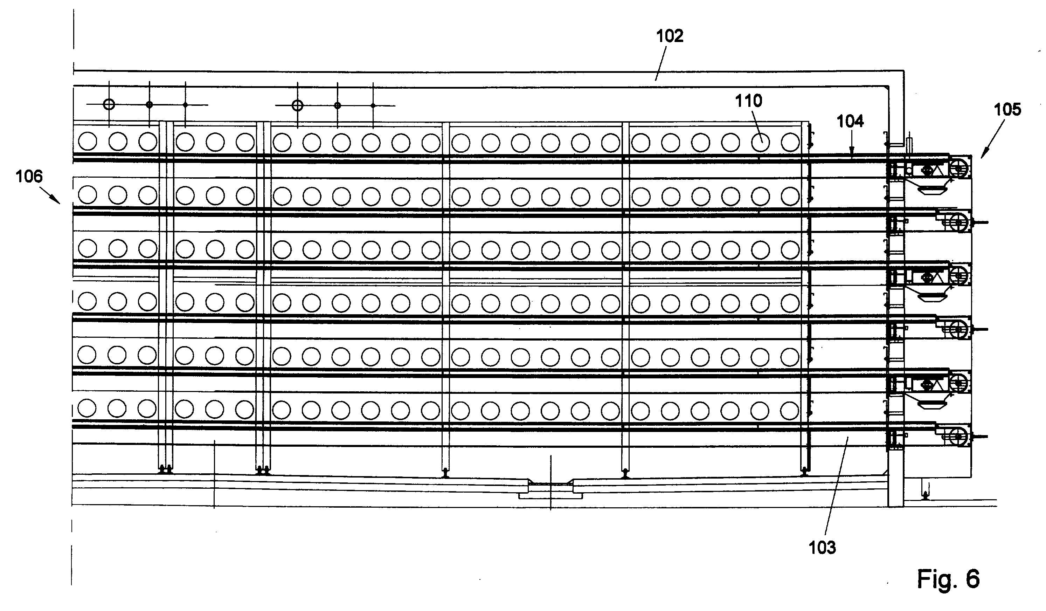

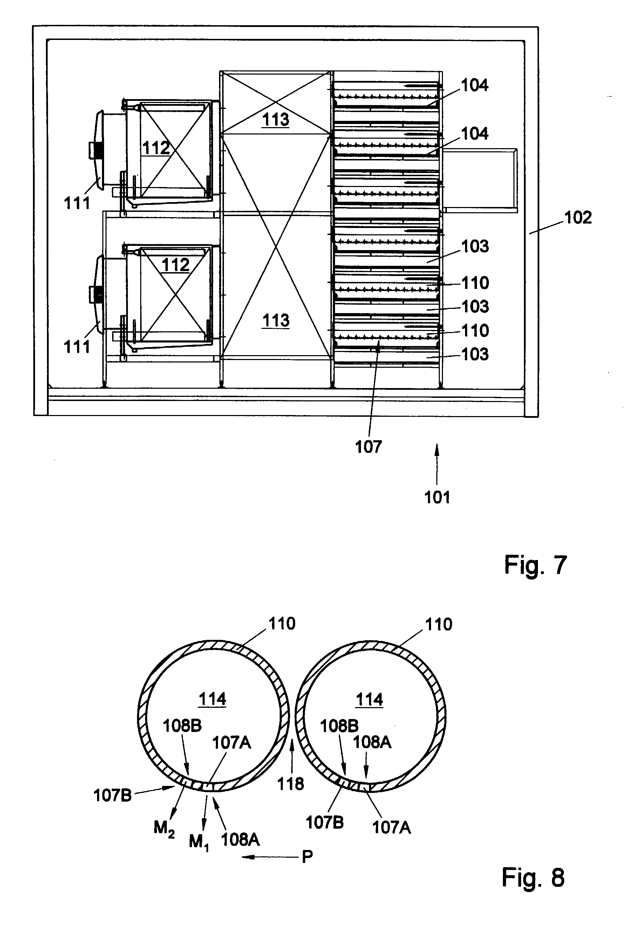

Figs. 5-8 show an alternative embodiment of an apparatus 101 according to the invention, comprising a substantially closed housing 102 containing a number of conveyor belts 103 that extend parallel to and above each other between a first end 105 and a second end 106. Arranged above each conveyor belt 103 again is a matrix of blowing openings 107, which blowing openings are provided in a series of parallel tubular parts 110 extending at right angles to the conveying direction P and parallel to the conveying surface of the conveyor belt 103. At a first end, in Fig. 7 on the right-hand side, the tubular parts 110 are closed, while their other ends are in open communication with diversion means 113 for cooled medium, to be further referred to as inner housing 113. This inner housing 113 communicates with medium cooling means 112 disposed before fans 111, such that by means of the fans 11 and via the cooling means 112 and inner housings 113, a cooled medium can be blown into the tubular parts 110 and can subsequently be blown on or at least against products located on the conveyor belts 103 via the blowing openings 107.

As shown in more detail in Fig. 8, wherein the tubular parts 110 are shown with a circular cross section, the blowing openings 107 are provided in the side that, during use, faces down. In the embodiment shown, each tubular part 110 comprises two rows 108A, 108B of juxtaposed blowing openings 107A, 107B. Of course, more or fewer rows of blowing openings may also be provided. The blow-out device M1 of the first row 108A of blowing openings 107A is directed almost completely vertically, i.e. at right angles to the conveying direction P of the products, while the flow-out direction M2 of the second row 108B of blowing openings 107B has a relatively smaI1 horizontal component, parallel to the conveying direction P. Thus, during use, the product is forced slightly in the conveying direction P by at least each second stream of medium from the flow-out openings 107B. This is advantageous in particular when the products are carried on a conveying track with relatively little friction, for instance on a fluid bed. To that end, in an advantageous embodiment, not shown, blowing openings 7, 107 may also be provided below the or each conveyor belt 3, 103, for at least partially carrying the products on, for instance, streams of cooled medium. These streams may or may not have a horizontal component as well. The conveyor belt is preferably medium-permeable, for instance a link belt or a belt having openings. In fact, the blowing direction M of each opening 7, 107 may be selected as desired.

As appears in particular from Fig. 8, a duct-shaped recess 118 is again provided between every two juxtaposed tubular parts 110, through which recesses at least a large portion of the cooled medium can be fed back in the direction of the fans 111. This substantially prevents undesired turbulence again. During use, in an apparatus 101 according to the invention, different flows of products can be treated one above the other, parallel to each other, yet such an apparatus may also be arranged for feeding the same flow of products back and forth through the apparatus, with the products each time being transferred to a higher or lower conveyor belt.

The tubular parts 110 can be fixedly arranged in the apparatus, yet it is preferred that they be mounted so as to be readily removable, for instance by means of bayonet connections, bolt connections or other suitable fastening techniques known to a skilled person. Since the chambers 114 of the tubular parts 110 have smooth walls, these tubular parts 110 can readily be cleaned. The preferably relatively small wall thickness moreover offers the advantage that the blowing openings 107 can readily be cleaned. The same holds for the blowing openings 7 of the box-like parts 10 as shown in Fig. 4.

The invention is by no means limited to the exemplary embodiments shown in the drawings. Within the framework of the invention, many variations are possible.

For instance, the mutual distances of the rows of blowing openings may be varied in the longitudinal direction of the conveyor belts for influencing the cooling pattern, while, moreover, through variation of the position of the blowing openings, the flow pattern of the cooled medium may be influenced. Although in the exemplary embodiments shown, matrix-shaped patterns for the blowing openings are shown as being particularly advantageous, other patterns may also be used for the blowing openings, while the blowing openings may furthermore have different shapes, for instance rectangular, oval and the like. Depending on, inter alia, the type and amount of products to be cooled, the desired cooling temperature and the layout of the apparatus, a skilled person will in each case readily be able to compose an optimal apparatus according to the invention. It will moreover be understood that the sections of the box-like and tubular parts may be chosen to be different, for instance tubular parts having rectangular, polygonal, oval sections and the like. Of course, in the embodiments shown, both box-like and tubular elements may be applied as desired, optionally in combination, for supplying cooled medium. Further, within the framework of the invention, other means may be used for effecting the desired cooling and displacement of the cooled medium, for instance sucking means and the like. These and many variations are understood to fall within the framework of the invention.

## Claims

1. An apparatus for freezing food products, comprising at least one freezing space and one conveying track for moving the food products through the freezing space, wherein blowing means are provided for blowing a cooled medium over the products present on the conveying track, **characterized in that** the blowing means comprise blowing openings, at least above at least a portion of the at least one conveying track, said blowing openings being arranged for blowing out the cooled medium at least substantially at right angles to the conveying direction of the at least one conveying track.

2. An apparatus according to claim 1, wherein the blowing openings are substantially formed by jet nozzles or like means increasing the velocity of the medium and/or directing the medium.

3. An apparatus according to claim 1 or 2, wherein the blowing openings are arranged in rows and/or columns, preferably matrix-shaped.

4. An apparatus according to claim 3, wherein in each case, at least a portion of at least one row of blowing openings is incorporated into the bottom of a box-like part.

5. An apparatus according to claim 4, wherein a series of box-like parts are arranged one behind the other, viewed in conveying direction of the conveying track, wherein in each case between at least two box-like parts, a duct-shaped recess is provided for laterally discharging, during use, at least a portion of the medium passed over the products from the blowing openings.

6. An apparatus according to claim 4 or 5, wherein the at least one box-like part is relatively readily detachable and exchangeable for a comparable box-like part, wherein preferably a series of box-like parts can be simultaneously removed.

7. An apparatus according to any one of claims 4-6, characterized in that the or each box-like part has at least one trough-shaped part and substantially smooth inner walls, such that the relevant box-like part can readily be cleaned.

8. An apparatus according to claim 3, wherein in each case at least one row of blowing openings, at least a portion of a row, is incorporated into the wall of a tubular part.

9. An apparatus according to claim 8, wherein a number of rows of blowing openings are in each case incorporated into one tubular part.

10. An apparatus according to claim 8 or 9, wherein the or each tubular part is relatively readily detachable and exchangeable for a comparable tubular part.

11. An apparatus according to any one of claims 8-10, wherein a series of tubular parts are arranged one behind the other, viewed in conveying direction of the conveying track, wherein in each case between two tubular parts, a duct-shaped recess is provided for laterally discharging, during use, at least a portion of the medium passed over the products from the blowing openings.

12. An apparatus according to any one of the preceding claims, wherein the blowing means are arranged for blowing the cooled medium from the blowing openings at a velocity such that the medium, measured on the surface of the products, has a velocity of minimally 4 m/s, preferably more than 5 m/s, in particular between 12-25 m/s.

13. An apparatus according to any one of the preceding claims, wherein blowing openings are provided on opposite sides of the conveying track.

14. A method for freezing, at least supercooling food products, wherein the food products are passed through a cooling space and wherein a cooled medium is blown out over the products at a relatively high velocity, more specifically at a velocity of more than 4 m/s, in particular more than 5 m/s, and preferably at a velocity of between 12 and 25 m/s, measured on or at least adjacent the surface of the product.

15. A method according to claim 14, wherein the cooled medium is blown onto the products substantially in a direction at right angles to the feed-through direction.

16. A method according to claim 14 or 15, wherein the cooled medium is blown onto the products in discrete air flows, preferably intermittently.

17. Blowing means for use in an apparatus or method according to any one of the preceding claims.

18. A box-like part of tubular part for use in an apparatus or method according to any one of claims 1-16.
